# EUROPEAN PATENT APPLICATION

(11) **EP 4 636 037 A1**
(43) Date of publication of application: **22.10.2025**
(21) Application number: 24171198.5
(22) Date of filing: 19.04.2024
(51) Int. Cl.: C08L 69/00, C08L 83/10, C08K 5/523, C08L 27/18, C08K 5/103, C08J 11/06

(54) **POLYCARBONATE COMPOSITIONS HAVING GOOD DUCTILITY AND FLAME RETARDANT PROPERTIES**

(71) Applicant: SHPP Global Technologies B.V., 4612 PX Bergen op Zoom (NL)
(72) Inventor: Wang, Qin, Shanghai (CN); Yang, Jian, Shanghai (CN); Guo, Mingcheng, Shanghai (CN)
(74) Representative: Modiano, Gabriella Diana

(57) **Abstract**

Thermoplastic compositions include: (a) from about 10 wt% to about 90 wt% of a polycarbonate component; (b) from about 2 wt% to about 40 wt% of a polycarbonate-siloxane (PC-Si) copolymer, wherein the PC-Si copolymer has a siloxane content of at least 25 wt%; and (c) from about 2 wt% to about 15 wt% of a bisphenol A bis(diphenyl phosphate) (BPADP) flame retardant. The combined weight percent value of all components does not exceed 100 wt%, and all weight percent values are based on the total weight of the composition.

## Description

### FIELD OF THE DISCLOSURE

The present disclosure relates to polycarbonate compositions, and in particular to polycarbonate compositions including a polycarbonate-siloxane copolymer that have good ductility and flame retardant properties.

### BACKGROUND OF THE DISCLOSURE

Polycarbonate is a popular plastic in the consumer electronics (CE) market due to its ductility. Flame retardant additives are incorporated to improve flame retardance (FR) of the polymer for CE applications. However, additional flame retardant additives reduce certain mechanical properties of polycarbonate, particularly impact strength.

Additionally, more customers in the CE market are seeking sustainable components to improve the green footprint in their products. Use of post-consumer recycled (PCR) plastics could potentially satisfy the customer's expectation in this market. However, compositions including PCR plastics-and in particular those with a high recycle content-do not provide sufficient FR and mechanical properties for many CE applications.

These and other shortcomings are addressed by aspects of the present disclosure.

### SUMMARY

Aspects of the disclosure relate to thermoplastic compositions including: (a) from about 10 wt% to about 90 wt% of a polycarbonate component; (b) from about 2 wt% to about 40 wt% of a polycarbonate-siloxane (PC-Si) copolymer, wherein the PC-Si copolymer has a siloxane content of at least 25 wt%; and (c) from about 2 wt% to about 15 wt% of a bisphenol A bis(diphenyl phosphate) (BPADP) flame retardant. The combined weight percent value of all components does not exceed 100 wt%, and all weight percent values are based on the total weight of the composition.

### DETAILED DESCRIPTION

This present disclosure relates to a novel composition of impact modified FR polycarbonate (PC) compounds which may include a high loading of mechanical post-consumer recycled PC. The compositions offer a balance of FR and outstanding impact properties, and the recycled content can meet a customer's expectation on sustainability. In particular, a siloxane-based PC copolymer (polycarbonate-siloxane copolymer) having a siloxane content of from about 25-65 wt% was identified to enhance the FR and ductility properties in PC blends.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 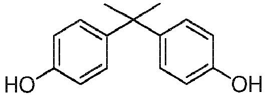 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 10 wt% to about 90 wt% of a polycarbonate component; (b) from about 2 wt% to about 40 wt% of a polycarbonate-siloxane (PC-Si) copolymer, wherein the PC-Si copolymer has a siloxane content of at least 25 wt%; and (c) from about 2 wt% to about 15 wt% of a bisphenol A bis(diphenyl phosphate) (BPADP) flame retardant. The combined weight percent value of all components does not exceed 100 wt%, and all weight percent values are based on the total weight of the composition.

The polycarbonate component may include a virgin polycarbonate or a mechanically recycled polycarbonate, and may include polycarbonate copolymers. In a specific aspect the polycarbonate component includes a mechanically recycled polycarbonate. An exemplary mechanically recycled polycarbonate is a post-consumer recycled polycarbonate (PCR-PC). PCR-PC is available from, e.g., Hongyu.

In certain aspects the composition includes from about 10 wt% to about 90 wt% of the polycarbonate component. In further aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at least 75 wt%, or at least 80 wt%, or at most 90 wt%, or at most 85 wt%, or at most 80 wt%, or at most 75 wt%, or at most 70 wt%, or at most 65 wt%, or at most 60 wt%, or at most 55 wt%, or at most 50 wt%, of the polycarbonate component.

In particular aspects the composition includes from about 50 wt% to about 85 wt%, or at least 50 wt%, or at least 55 wt%, or at least 60 wt%, or at least 65 wt%, or at least 70 wt%, or at least 75 wt%, or at least 80 wt%, or at most 85 wt%, or at most 80 wt%, or at most 75 wt%, or at most 70 wt%, or at most 65 wt%, or at most 60 wt%, of a mechanically recycled polycarbonate.

In some aspects the composition includes from greater than 0 wt% to about 20 wt%, or at least 1 wt%, or at least 2 wt%, or at least 3 wt%, or at least 4 wt%, or at least 5 wt%, or at least 10 wt%, or at least 15 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of at least one virgin polycarbonate.

Compositions according to aspects of the disclosure include from about 2 wt% to about 40 wt% of a polycarbonate-siloxane (PC-Si) copolymer. The PC-Si copolymer has a siloxane content of at least 25 wt%. In certain aspects the polycarbonate copolymer component includes a polycarbonate-siloxane copolymer having a siloxane content of from about 25 wt% to about 65 wt%, or at least 25 wt%, or at least 30 wt%, or at least 35 wt%, or at most 65 wt%, or at most 60 wt%, or at most 55 wt%, or at most 50 wt%, or at most 45 wt%, based on the total weight of the polycarbonate-siloxane copolymer component. In further aspects the polycarbonate-siloxane copolymer has a siloxane content of from about 35-45 wt%, or from about 38-42 wt%, or about 40 wt% (such as a 40 wt% siloxane copolymer available from SABIC).

In further aspects the composition includes at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at least 15 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, or at most 30 wt%, or at most 29 wt%, or at most 28 wt%, or at most 27 wt%, or at most 26 wt%, or at most 25 wt%, or at most 24 wt%, or at most 23 wt%, or at most 22 wt%, or at most 21 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, of the polycarbonate-siloxane copolymer having a siloxane content of at least 25 wt%. In a particular aspect the composition includes from about 5 wt% to about 30 wt%, or from about 5 wt% to about 10 wt%, of the PC-Si copolymer.

Compositions according to aspects of the disclosure include from about 2 wt% to about 15 wt% of a BPADP flame retardant. BPADP has the structure of Formula 1:

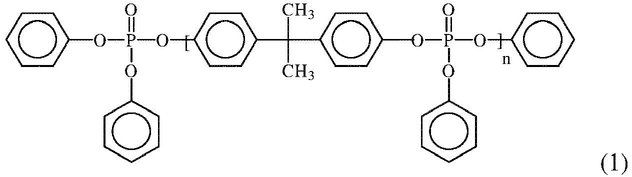

In some aspects the composition includes at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at least 11 wt%, or at least 12 wt%, or at least 13 wt%, or at least 14 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, of the BPADP flame retardant. In certain aspects the composition includes from about 5 wt% to about 15 wt%, or from about 5 wt% to about 10 wt%, of the BPADP flame retardant.

In other aspects the composition includes from about 0.05 wt% to about 2 wt% of a polytetrafluoroethylene (PTFE) flame retardant. A PTFE flame retardant may provide anti-drip properties to the composition. An exemplary PTFE flame retardant is styreneacrylonitrile encapsulated PTFE (SAN-PTFE).

In further aspects the composition includes at least one additional additive including, but not limited to, an acid scavenger, an anti-drip agent, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof. In particular aspects the composition includes from about 0.1 wt% to about 10 wt%, or at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1.0 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, or at most 0.5 wt%, of the at least one additional additive.

Compositions according to aspects of the disclosure may have good flame retardant (FR) properties as evaluated in accordance with UL94. In some aspects the composition has a V0 flame retardant rating at a thickness of 1.0 mm, or 0.9 mm, or 0.8 mm, or 0.75 mm, as evaluated in accordance with UL94. The V0 flame retardant rating may be achieved both before and after aging in accordance with UL94.

In certain aspects compositions according to aspects of the disclosure have a melt flow rate (MFR) of at least 8 grams per 10 minutes (g/10 min) as tested in accordance with ASTM D1238 at a temperature of 265 °C and a load of 2.16 kilograms (kg). In further aspects the MFR of at least 9 g/10 min, or at least 10 g/10 min, or at least 11 g/10 min, or at least 12 g/10 min, or at least 13 g/10 min, or at least 14 g/10 min, or at least 15 g/10 min, or at most 25 g/10 min, or at most 20 g/10 min, as tested in accordance with ASTM D1238 at a temperature of 265 °C and a load of 2.16 kg.

In further aspects compositions according to aspects of the disclosure have a notched Izod impact (NII) strength of at least 300 joules per meter (J/m) at 23 °C, or at least 350 J/m, or at least 400 J/m, or at least 450 J/m, or at least 500 J/m, or at least 550 J/m, or at least 600 J/m, or at least 650 J/m, or at least 700 J/m, or at least 750 J/m, or at least 800 J/m, or at least 850 J/m, or at least 900 J/m, as evaluated in accordance with ASTM D256 using a pendulum energy of 5 lbf/ft.

In other aspects the composition has an NII ductility of at least 90% at 23 °C, or a ductility of at least 95%, or a ductility of 100%, as evaluated in accordance with ASTM D256 using a pendulum energy of 5 lbf/ft.

In particular aspects the composition has an NII strength of at least 300 J/m at 0 °C, or at least 350 J/m, or at least 400 J/m, or at least 450 J/m, or at least 500 J/m, or at least 550 J/m, or at least 600 J/m, or at least 650 J/m, or at least 700 J/m, or at least 750 J/m, or at least 800 J/m, as evaluated in accordance with ASTM D256 using a pendulum energy of 5 lbf/ft.

In specific aspects the composition has an NII ductility of at least 90% at 0 °C, or a ductility of at least 95%, or a ductility of 100%, as evaluated in accordance with ASTM D256 using a pendulum energy of 5 lbf/ft.

In certain aspects the composition has an L* of at least 80 as evaluated according to a CIELab color space using a sample thickness of 3.2 millimeter (mm). In further aspects the composition has an L* of at least 81, or at least 82, or at least 83, or at least 84, or at least 85, or at least 86, or at least 87, or at least 88, as evaluated according to a CIELab color space using a sample thickness of 3.2 mm.

In particular aspects the composition is chemically resistant as evaluated after 7 days of exposure to sunscreen having a sun protection factor (SPF) of 30 (SPF30) under an applied strain of 0.7%.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In particular aspects the article is a component of a consumer electronics device.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a. from about 10 wt% to about 90 wt% of a polycarbonate component;
b. from about 2 wt% to about 40 wt% of a polycarbonate-siloxane (PC-Si) copolymer, wherein the PC-Si copolymer has a siloxane content of at least 25 wt%; and
c. from about 2 wt% to about 15 wt% of a bisphenol A bis(diphenyl phosphate) (BPADP) flame retardant,
wherein the combined weight percent value of all components does not exceed 100 wt%, and all weight percent values are based on the total weight of the composition.

Aspect 2. The thermoplastic composition according to Aspect 1, wherein the polycarbonate component comprises a virgin polycarbonate or a mechanically recycled polycarbonate.

Aspect 3. The thermoplastic composition according to Aspect 2, wherein the polycarbonate component comprises a mechanically recycled polycarbonate.

Aspect 4. The thermoplastic composition according to any of Aspects 1 to 3, wherein the composition comprises from about 50 wt% to about 85 wt% of a mechanically recycled polycarbonate.

Aspect 5. The thermoplastic composition according to Aspect 4, wherein the composition further comprises from greater than 0 wt% to about 20 wt% of at least one virgin polycarbonate.

Aspect 6. The thermoplastic composition according to any of Aspects 1 to 5, wherein the PC-Si copolymer has a siloxane content of from 25 wt% to 65 wt%.

Aspect 7. The thermoplastic composition according to any of Aspects 1 to 6, wherein the PC-Si copolymer has a siloxane content of from 35 wt% to 45 wt%.

Aspect 8. The thermoplastic composition according to any of Aspects 1 to 7, wherein the composition comprises from about 5 wt% to about 30 wt% of the PC-Si copolymer.

Aspect 9. The thermoplastic composition according to any of Aspects 1 to 8, wherein the composition comprises from about 5 wt% to about 15 wt% of the BPADP flame retardant.

Aspect 10. The thermoplastic composition according to any of Aspects 1 to 9, wherein the composition further comprises from about 0.05 wt% to about 2 wt% of a polytetrafluoroethylene (PTFE) flame retardant.

Aspect 11. The thermoplastic composition according to any of Aspects 1 to 10, wherein the composition comprises at least one additional additive.

Aspect 12. The thermoplastic composition according to Aspect 11, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

Aspect 13. The thermoplastic composition according to Aspect 11 or 12, wherein the composition comprises from about 0.1 wt% to about 10 wt% of the at least one additional additive.

Aspect 14. The thermoplastic composition according to any of Aspects 1 to 13, wherein the composition has a V0 flame retardant rating at a thickness of 0.75 mm as evaluated in accordance with UL94.

Aspect 15. The thermoplastic composition according to any of Aspects 1 to 14, wherein the composition has a melt flow rate of at least 15 grams per 10 minutes (g/10 min) as tested in accordance with ASTM D1238 at a temperature of 265 °C and a load of 2.16 kilograms (kg).

Aspect 16. The thermoplastic composition according to any of Aspects 1 to 15, wherein the composition has:
a notched Izod impact (NII) strength of at least 300 joules per meter (J/m) at 23 °C;
a NII ductility of at least 90% at 23 °C;
a NII strength of at least 300 J/m at 0 °C; or
a NII ductility of at least 90% at 0 °C,
wherein NII strength and NII ductility are evaluated at the indicated temperature in accordance with ASTM D256 using a pendulum energy of 5 lbf/ft.

Aspect 17. The thermoplastic composition according to any of Aspects 1 to 16, wherein the composition has an L* of at least 80 as evaluated according to a CIELab color space using a sample thickness of 3.2 millimeter (mm).

Aspect 18. The thermoplastic composition according to any of Aspects 1 to 17, wherein the composition is chemically resistant as evaluated after 7 days of exposure to sunscreen having a sun protection factor (SPF) of 30 (SPF30) under an applied strain of 0.7%.

Aspect 19. An article comprising the thermoplastic composition according to any of Aspects 1 to 18.

Aspect 20. The article according to Aspect 19, wherein the article is a component of a consumer electronics device.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components listed in Table 1:

**Table 1 - Components**

| **Component** | **Item Description** | **Source** |
|---|---|---|
| PC1 | 100 GRADE PCP, virgin polycarbonate homopolymer | SABIC |
| PC2 | PCP1300, virgin polycarbonate homopolymer | SABIC |
| EXL | PC/Siloxane Copolymer, 20 wt% siloxane, PCP Endcapped | SABIC |
| PC-Si (40%) | PC/Siloxane Copolymer, 40 wt% siloxane, PCP Endcapped | SABIC |
| AO1076 | Anti-oxidant 1076, stabilizer | BASF |
| PETS | Pentaerythritol tetrastearate, mold release | FACI |
| BPADP | Bisphenol A bis(diphenyl phosphate), flame retardant | Daihachi |
| TSAN | SAN encapsulated PTFE - intermediate resin, flame retardant/anti drip | SABIC |
| TBPP | Tris(2,4-di-tert-butylphenyl) phosphite, antioxidant 168, stabilizer | |
| PCR-PC | Post-consumer recycled polycarbonate | Hongyu |

Compositions described herein were extruded into pellets and then injection molded into samples for the indicated tests. The pellet compounding process was performed on a Toshiba TEM-37BS twin-screw extruder. The FR component (BPADP) was fed separately before Zone 3. The other resins and additives were pre-mixed and fed from the main throat using another feeder. Compositions/samples were molded from the pellets according to the conditions shown in Table 2:

**Table 2 - Injection Molding Conditions**

| Molding parameters | Unit | Value |
|---|---|---|
| Pre-drying time | Hour | 4 |
| Pre-drying temp | °C | 90 |
| Hopper temp | °C | 70 |
| Zone 1 temp | °C | 220 |
| Zone 2 temp | °C | 230 |
| Zone 3 temp | °C | 245 |
| Nozzle temp | °C | 245 |
| Mold temp | °C | 80 |

Tensile properties were evaluated according to ASTM D638 at a test speed of 50 mm/min. Notched Izod impact strength (NII) was evaluated according to ASTM D256 with pendulum energy of 5 lbf/ft. Flexural properties were evaluated according to ASTM D790 at a test speed of 1.27 mm/min and a part thickness of 3.2 mm. Melt Flow Rate (MFR) was measured using granulate samples dried for 4 hours at 90 °C according to ASTM D1238. HDT was evaluated according to ASTM D648 at a stress of 1.82 MPa and a part thickness of 3.2 mm. Flame retardance Vx was evaluated in accordance with UL94. Color properties (L*, a*, b*) were evaluated according to a CIELab color space using a sample having a thickness of 3.2 mm. Spiral flow was evaluated according to ASTM D3123 by measuring the injecting channel depth/length.

Chemical resistance evaluated to test the accelerated failure of polymeric materials as a combined effect of environment, temperature, and stress. The failure mainly depends on the characteristics of the material, chemical, exposure conditions, and the magnitude of the stress. For the chemical resistance evaluation, test bars were exposed to sunscreen cream (Banana Boat^{®} with SPF30) for 7 days under an applied strain of 0.7%. Thereafter the surface was observed to determine the chemical resistance of the sample. The best performance ("OK" in the tables) was assigned if there was no surface change to the sample; samples having this performance are considered "chemically resistant" as this term is used herein. Medium performance was assigned if the surface had micro crazes but no cracks. Low/poor performance was assigned if the surface had macro cracks.

Compositions including virgin polycarbonate were prepared and tested as shown in Table 3:

**Table 3 - Comparative Compositions Including Virgin PC**

| **Component** | | | **C1** | **C2** | **Ex1** | **C3** | **Ex2** | **C4** | **Ex3** | **C5** | **Ex4** |
|---|---|---|---|---|---|---|---|---|---|---|---|
| BPADP | | % | 5 | 5 | 5 | 10 | 10 | 15 | 15 | 15 | 15 |
| EXL | | % | 5 | | | 20 | | 20 | | 30 | |
| PC-Si (40%) | | % | | 2.5 | 7.5 | | 10 | | 10 | | 15 |
| PC1 | | % | 42.84 | 43.34 | 41.34 | 33.54 | 38.54 | 30.54 | 33.54 | 26.04 | 32.54 |
| PC2 | | % | 45.7 | 47.7 | 44.7 | 35 | 40 | 33 | 40 | 27.5 | 36 |
| TSAN | | % | 1 | 1 | 1 | 1 | 1 | 1 | 1 | 1 | 1 |
| AO1076 | | % | 0.08 | 0.08 | 0.08 | 0.08 | 0.08 | 0.08 | 0.08 | 0.08 | 0.08 |
| TBPP | | % | 0.08 | 0.08 | 0.08 | 0.08 | 0.08 | 0.08 | 0.08 | 0.08 | 0.08 |
| PETS | | % | 0.3 | 0.3 | 0.3 | 0.3 | 0.3 | 0.3 | 0.3 | 0.3 | 0.3 |
| Total | | % | 100 | 100 | 100 | 100 | 100 | 100 | 100 | 100 | 100 |
| Total siloxane content | | % | 0 | 1.0 | 3.0 | 4.0 | 4.0 | 4.0 | 4.0 | 6.0 | 6.0 |
| | | | | | | | | | | | |

| **Properties** | | | **C1** | **C2** | **Ex1** | **C3** | **Ex2** | **C4** | **Ex3** | **C5** | **Ex4** |
|---|---|---|---|---|---|---|---|---|---|---|---|
| Melt flow rate (MFR), 265 °C, 2.16 kg | | g/10 min | 10.3 | 9.78 | 8.15 | 12 | 11.5 | 18.6 | 18.3 | 16.1 | 17.05 |
| Spiral flow, 270 °C/70 °C, 1mm | | cm | 5.2 | 5.7 | 6.2 | 10.4 | 9.9 | 13.1 | 12.8 | 12.8 | 12.7 |
| HDT, 0.45 MPa, 3.2 mm | | °C | 118 | 118 | 118 | 103 | 103 | 88.3 | 89.2 | 88 | 88.6 |
| HDT, 1.82 MPa, 3.2 mm | | °C | 106 | 106 | 105 | 92 | 91.5 | 79 | 80.3 | 79.6 | 79.9 |
| NII, RT (23 °C) | | J/m | 244 | 267 | 874 | 776 | 921 | 78.5 | 817 | 232 | 899 |
| NII ductility, RT | | % | 20 | 20 | 100 | 100 | 100 | 0 | 100 | 100 | 100 |
| NII, 0 °C | | J/m | 96.8 | 116 | 776 | 119 | 845 | 76.2 | 656 | 90.5 | 806 |
| Chemical resistance (sunscreen 7 days with 0.7% strain) | | | 3/4 crack | 1/4 craze; no crack | OK | 4/4 crack | OK | \ | \ | \ | \ |
| NII ductility, 0°C | | % | 0 | 0 | 100 | 0 | 100 | 0 | 100 | 0 | 100 |
| FR at 1.0 mm, UL94 | | | V0 | V0 | V0 | V0 | V0 | V0 | V0 | V0 | V0 |
| FR at 0.75 mm, UL94 | | | V1 (81s) | V0 (30s) | V0 (38s) | V0 (17s) | V0 (20s) | V0 (17s) | V0 (18s) | V0 (19s) | V0 (20s) |
| Tensile modulus | | MPa | 2483 | 2445 | 2339 | 2542 | 2424 | 2664 | 2552 | 2568 | 2436 |
| Tensile strength at yield | | MPa | 65.5 | 63.3 | 60.4 | 65.2 | 60.7 | 65.9 | 61.9 | 64.8 | 59.5 |
| Tensile strength at break | | MPa | 58.3 | 57.7 | 55.3 | 44.8 | 62.8 | 45 | 56.4 | 42.8 | 50.3 |
| Tensile elongation at break | | % | 74.3 | 75 | 78.6 | 103.5 | | 37.2 | 91.3 | 49.8 | 80.4 |
| Color-reflection | | | | | | | | | | | |
| | L* | - | 72.3 | 76.4 | 84.2 | 80.7 | 86.7 | 80.3 | 86.7 | 81.7 | 88.7 |
| | a* | - | -2.2 | -1.9 | -1.8 | -2.6 | -1.5 | -2.5 | -1.5 | -2.6 | -1.4 |
| | b* | - | -2.6 | -1.2 | -0.3 | -3.6 | 0.4 | -2.9 | 0.3 | -4.2 | 0.7 |
| Flexural modulus | | MPa | 2480 | 2470 | 2380 | 2550 | 2450 | 2660 | 2600 | 2590 | 2460 |
| Flexural strength | | MPa | 102 | 101 | 95.2 | 100 | 95.3 | 100 | 97 | 97.5 | 92.1 |
| Flexural strength at break | | MPa | 100 | 98.5 | 93.3 | 98.3 | 93.4 | 98 | 95.1 | 95.5 | 90.3 |

From the data in Table 3 it was observed that compositions having a suitable loading of a phosphate-based flame retardant (BPADP) and a polycarbonate-siloxane copolymer having a siloxane content of 40 wt% had good thin-wall FR properties (0.75 mm or thinner), good ductility properties (NII strength and NII ductility) at room temperature and 0 °C, and good flowability (HDT). This technical effect could not be achieved with BPADP/EXL (20 wt% siloxane) blends, even with the same siloxane loading. Additionally, compositions including PC-Si (40%) had improved color (L*) properties as compared to the comparative compositions including EXL (20 wt% siloxane), providing an opportunity for articles having a white/whiter color.

Comparative and example compositions including post-consumer recycled polycarbonate (PCR-PC) were prepared and tested as shown in Table 4:

**Table 4 - Compositions Including PCR-PC**

| **Component** | **Unit** | **C6** | **Ex5** | |
|---|---|---|---|---|
| PC1 | % | 4.04 | 10.04 | |
| PC2 | % | 7.5 | 7.5 | |
| EXL | % | 13 | | |
| PC-Si (40%) | % | | 6.5 | |
| BPADP | % | 9 | 9.5 | |
| TSAN | % | 1 | 1 | |
| TBPP | % | 0.08 | 0.08 | |
| AO1076 | % | 0.08 | 0.08 | |
| PETS | % | 0.3 | 0.3 | |
| PCR-PC | % | 65 | 65 | |
| Total | % | 100 | 100 | |
| Total siloxane content | % | 2.6 | 2.6 | |
| | | | | |

| **Properties** | | | | |
|---|---|---|---|---|
| MFR, 265 °C/2.16 kg/300 s | g/10min | 14 | 15 | |
| HDT, 1.82 MPa/3.2 mm | °C | 96 | 94 | |
| NII, 23 °C | J/m | 88.2 | 765 | |
| Flexural modulus | MPa | 2630 | 2630 | |
| Flexural strength at break | MPa | 102 | 100 | |
| Tensile modulus | MPa | 2694 | 2698 | |
| Tensile strength at yield | MPa | 66 | 64 | |
| Tensile elongation at break | % | 66 | 73 | |

| Color at 3.2 mm | | | | |
|---|---|---|---|---|
| | a* | | -3.5 | -3.1 |
| | b* | | -3.6 | -2.5 |
| | L* | | 77.1 | 80.3 |
| FR at 0.75 mm, UL94 | | | V0 (16s) | V0 (19s) |

Comparative composition C10 included PCR-PC and EXL (20 wt% siloxane). Example composition Ex1 included PCR-PC and PC-Si (40 wt% siloxane). The total siloxane content in each composition was 2.6 wt% (13 wt% of PC-Si including 20 wt% siloxane in C10 and 6.5 wt% of PC-Si including 40 wt% siloxane in Ex1). From the data it is observed that with a high PCR-PC loading in C10 impact performance (NII) was very low even with the EXL PC-Si copolymer included. In contrast, example composition Ex1 with PC-Si (40%) had a much higher impact strength with a lower PC-Si loading (6.5 wt% vs. 13 wt%). Other mechanical properties of Ex1 such as HDT, tensile properties and flexural properties were comparable to those of C10.

From the results it can be concluded that incorporating a polycarbonate-siloxane copolymer having a higher siloxane content (e.g., 40 wt%) into the polymer compositions described herein provides the compositions with good FR, impact, and flow properties, making them suitable for consumer electronics applications in which a high recycled/sustainable content is desired. The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a. from about 10 wt% to about 90 wt% of a polycarbonate component;
b. from about 2 wt% to about 40 wt% of a polycarbonate-siloxane (PC-Si) copolymer, wherein the PC-Si copolymer has a siloxane content of at least 25 wt%; and
c. from about 2 wt% to about 15 wt% of a bisphenol A bis(diphenyl phosphate) (BPADP) flame retardant,
wherein the combined weight percent value of all components does not exceed 100 wt%, and all weight percent values are based on the total weight of the composition.

2. The thermoplastic composition according to claim 1, wherein the polycarbonate component comprises a virgin polycarbonate or a mechanically recycled polycarbonate.

3. The thermoplastic composition according to claim 2, wherein the polycarbonate component comprises a mechanically recycled polycarbonate.

4. The thermoplastic composition according to any of claims 1 to 3, wherein the composition comprises from about 50 wt% to about 85 wt% of a mechanically recycled polycarbonate.

5. The thermoplastic composition according to claim 4, wherein the composition further comprises from greater than 0 wt% to about 20 wt% of at least one virgin polycarbonate.

6. The thermoplastic composition according to any of claims 1 to 5, wherein the PC-Si copolymer has a siloxane content of from 35 wt% to 45 wt%.

7. The thermoplastic composition according to any of claims 1 to 6, wherein the composition comprises from about 5 wt% to about 15 wt% of the BPADP flame retardant.

8. The thermoplastic composition according to any of claims 1 to 7, wherein the composition further comprises from about 0.05 wt% to about 2 wt% of a polytetrafluoroethylene (PTFE) flame retardant.

9. The thermoplastic composition according to any of claims 1 to 8, wherein the composition comprises at least one additional additive, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, an additional flame retardant, a UV reflecting additive, an impact modifier, a blowing agent, a reinforcing agent, or a combination thereof.

10. The thermoplastic composition according to any of claims 1 to 9, wherein the composition has a V0 flame retardant rating at a thickness of 0.75 mm as evaluated in accordance with UL94.

11. The thermoplastic composition according to any of claims 1 to 10, wherein the composition has a melt flow rate of at least 15 grams per 10 minutes (g/10 min) as tested in accordance with ASTM D1238 at a temperature of 265 °C and a load of 2.16 kilograms (kg).

12. The thermoplastic composition according to any of claims 1 to 11, wherein the composition has:
a notched Izod impact (NII) strength of at least 300 joules per meter (J/m) at 23 °C;
a NII ductility of at least 90% at 23 °C;
a NII strength of at least 300 J/m at 0 °C; or
a NII ductility of at least 90% at 0 °C,
wherein NII strength and NII ductility are evaluated at the indicated temperature in accordance with ASTM D256 using a pendulum energy of 5 lbf/ft.

13. The thermoplastic composition according to any of claims 1 to 12, wherein the composition has an L* of at least 80 as evaluated according to a CIELab color space using a sample thickness of 3.2 millimeter (mm).

14. The thermoplastic composition according to any of claims 1 to 13, wherein the composition is chemically resistant as evaluated after 7 days of exposure to sunscreen having a sun protection factor (SPF) of 30 (SPF30) under an applied strain of 0.7%.

15. An article comprising the thermoplastic composition according to any of claims 1 to 14, wherein the article is a component of a consumer electronics device.
